# EUROPEAN PATENT SPECIFICATION

(11) **EP 4 499 782 B1**
(45) Date of publication and mention of the grant of the patent: **24.12.2025**
(21) Application number: 23717080.8
(22) Date of filing: 30.03.2023
(51) Int. Cl.: C10G 1/10

(54) **METHOD FOR TRANSFORMING SOLID PLASTIC WASTE INTO HYDROCARBONS**
VERFAHREN ZUM UMWANDELN VON FESTEN KUNSTSTOFFABFÄLLEN IN KOHLENWASSERSTOFFE
PROCÉDÉ DE TRANSFORMATION DE DÉCHETS PLASTIQUES SOLIDES EN HYDROCARBURES

(30) Priority: 30.03.2022 EP 22382307
(43) Date of publication of application: 05.02.2025
(73) Proprietor: Graphene Synthetic Feedstock SL, 20009 Donostia (Gipuzkoa) (ES)
(72) Inventor: REYES SALINAS, Mario Celedonio, 20009 Donostia (ES); PALMA GÓMEZ, Olatz, 20009 Donostia (ES); KRAVETZ MIRANDA, Humberto, 20009 Donostia (ES); MONTEALEGRE AGUADO, Mª Angeles, 20009 Donostia (ES)
(74) Representative: Balder IP Law, S.L.
(86) International application number: PCT/EP2023/058416
(87) International publication number: WO 2023/187128

(56) References cited:
- WO-A1-2021/209276
- CN-A- 111 100 661
- GANANZIA: "Entrevista a Karlos Uraga (CEO de Teknan)", 5 January 2020 (2020-01-05), XP055955901, Retrieved from the Internet <URL:https://www.youtube.com/watch?v=EfCoXf_29J0&ab_channel=Gananzia> [retrieved on 20220829]
- ANONYMOUS: "Teknan investiga los múltiples usos industriales del grafeno", 30 September 2019 (2019-09-30), XP055955900, Retrieved from the Internet <URL:https://www.elcorreo.com/economia/teknan-investiga-multiples-20190930211646-nt.html?ref=https://www.google.com/> [retrieved on 20220829]

## Description

### FIELD OF THE INVENTION

The present invention is related to solid waste management, specifically to a method for transforming solid plastic waste into linear, ramified and/or cyclic saturated and/or unsaturated hydrocarbons, which may be used, e.g., as feedstock to manufacture polymers, as feedstock to blend in fuels and/or as drop-in quality fuels.

### BACKGROUND OF THE INVENTION

One of the main problems the world is currently facing is the environmental pollution by polymeric material waste. Storage of such polymeric material waste is generally performed at landfills, and waste treatment includes simple burning or calcining. Only small amounts are recycled, after sorting the diverse types of polymeric materials. Inevitably, great amounts of polymeric material waste ends up by polluting the environment, e.g., the oceans.

Along the years, many attempts to develop methods for converting polymeric material waste, by thermal or thermocatalytic destruction, e.g., pyrolysis, to try to obtain products having added value, such as fuels, heating oil, hydrocarbon gas, carbon residue or coke. The methods of the state of the art have inconveniences such as complexity, numerous reaction steps, need of previous classification of the different polymeric materials present in the waste, need of cleaning and separation of the polymeric materials to be processed, high costs, e.g., due to high energy consumption, low yield, and/or final products which require further processing to be actually used, such as purification or further reactions.

For example, EP3312223B1 discloses a method of thermal destruction of polyethylene and polypropylene waste, which comprises the thermal destruction, at temperatures of between 450°C-480°C of crushed and purified waste; such method comprising several steps, performed in a series of sequential reactors, including a catalyst column, the catalyst preferably made in the form of titanium spirals.

WO2021209276A1 discloses a pyrolysis process to obtain petrochemical products from plastic waste, which comprises the addition of nanoparticle carbon-based reagents. Although an extense list of potential carbon-based reagents is described therein, for none of them any experimental result is provided, i.e. for none of them an efficacy is shown, and even the less the convenience or advantage of one or another over the remaining potential reagents.

JPH08337782 discloses a process for converting a heavy oil into a light oil in high reutilizing waste plastics without necessitating expensive hydrogen and catalyst by mixing a heavy oil with waste plastics and heat-treating the mixture at a specific temperature in a non-oxidizing atmosphere. In particular, this document discloses a heavy oil consisting of a petroleum-based heavy oil or a coal-based heavy oil is mixed with (B) waste plastics and the mixture is heat-treated at 350-460 °C (especially 380-450 °C) in (C) a non-oxidizing atmosphere such as nitrogen, argon, helium or hydrocarbon gas. The mixing ratio of the component A to the component B is preferably 0.1-1.0 wt. % of the component B based on 1 wt.% of the component A and the heat-treatment is carried out under a pressure between atmospheric pressure and 50 atm for 10-40 min.

### Carbon and its nanostructures

Carbon is capable of forming many allotropes (structurally different forms of the same element) due to its valency. Well-known forms of carbon include e.g. diamond and graphite. In recent decades, many more allotropes have been discovered and researched, including ball shapes such as fullerenes, sheets such as graphene, or cylindrical such as nanotubes. The allotropes may be crystalline or amorphous.

According to the number of dimensions found on the nanoscale (i.e. less than 100 nm), the Royal Society of Chemistry and the Royal Academy of Engineering in 2004 distinguished three types of nanostructures:
a) One-dimensional nanostructures: surfaces having a nanometric thickness, such as thin films formed by one or more atomic layers. In the case of carbon nanostructures, for example graphene sheets;
b) Two-dimensional nanostructures: the nano-structured material is nanometric in two of three spatial dimensions. In the case of carbon nanostructures, for example carbon nanotubes;
c) Three-dimensional nanostructures: the nano-structured material is nanometric in the three dimensions (x, y, z). In the case of carbon nanostructures, for example fullerenes, quantum dots.

### Graphene

Graphene is a two-dimensional sheet of carbon atoms, each carbon atom covalently bonded through sp² hybridization, called σ, to its three nearest neighbours. Such bonds give rise to a flat hexagonal network of carbon atoms (honeycomb structure). In such a network, each carbon atom provides an electron that remains without hybridizing and delocalized. Such electrons form a valence band, i.e. a band of occupied π orbitals, and a conduction band, i.e. a band of empty orbitals π*, which extend over the whole sheet. The properties of graphene, especially the electronic properties, are largely determined by the delocalized electrons, which have great mobility in directions which are parallel to the plane. Due to the absence of chemical bonding in perpendicular direction with regard to the plane of carbon atoms, the interactions in this direction are very weak. Individual graphene sheets were isolated for the first time in 2004 by K.S. Novoselov and A.K Geim. Graphene has a high specific surface area, much larger than that reported for e.g. for carbon black and carbon nanotubes, and may be similar to that of activated carbon. Atoms at the edges of a graphene sheet have special chemical reactivity, and defects within a sheet increase its chemical reactivity *(*Denis, P. A. et al, 2013, "Comparative Study of Defect Reactivity in Graphene", Journal of Physical Chemistry C. 117 (37): 19048-19055*).*

It has been described that the reactivity of graphene may be increased by covalent modification thereof: carbons having a sp² configuration, when transformed into a sp³ configuration, which would lead to a tetrahedral geometry, form longer bonds. Such a transformation does not only affect the carbon actually transformed into a sp³ configuration, but creates also a geometric distortion, which extends over multiple positions in the network. Such a functionalization has been described for example in EP3486214B1.

### SUMMARY OF THE INVENTION

A new method to obtain chemical species such as linear, ramified and/or cyclic saturated and/or unsaturated hydrocarbons (including, e.g., aromatic hydrocarbons) from solid plastic waste, which may both be a specific type of solid plastic waste or be a mixture of different plastic materials, using low temperatures in a system of cascade reaction, with external contribution of carbon by addition of small amounts of activated graphene nanomaterial, and without generating char-type waste.

### BRIEF DESCRIPTION OF THE FIGURES

Fig. 1: average RAMAN spectroscopy for the activated graphene nanomaterial used in the method of the present invention.
Fig. 2: RAMAN spectroscopy for commercial graphene nanomaterial (graphene nanopowder AO-1 from Graphene Supermarket), before being submitted to the activation as disclosed herein (source: Lilloja et al., Catalysts (2016), 6, 108*)*
Fig. 3: RAMAN spectroscopy for commercial graphene nanomaterial (graphene nanopowder AO-1 from Graphene Supermarket), before being submitted to an activation as disclosed herein (source: *www.graphene-supermarket.com)*
Fig. 4: RAMAN spectroscopy for commercial graphene nanomaterial (graphene nanoplatelets from Nanografi, before being submitted to an activation as disclosed herein (source: *www.nanografi.com)*
Fig. 5: distillation curves of products obtained from the LDPE solid plastic processed in Comparative Example 1 (without activated graphene nanomaterial) compared to the distillation curves of diesel and gasoline fuels: Fig, 5A) raw product obtained directly from the process; Fig. 5B) first fraction obtained from the distillation of the raw product; Fig. 5C) second fraction obtained from the distillation of the raw product.
Fig. 6: distillation curves of products obtained from the LDPE solid plastic processed in Example 1 (with activated graphene nanomaterial) compared to the distillation curves of diesel and gasoline fuels: Fig. 6A) raw product obtained directly from the process; Fig. 6B) first fraction obtained from the distillation of the raw product; Fig. 6C) second fraction obtained from the distillation of the raw product.
Fig. 7: TEM (transmission electron microscopy) images of graphene (source: Chen Y. et al, J Polym Eng 2013; 33(2): 163-171*)*
Fig. 8: TEM images of carbon black particle aggregates collected on different dates (source: Miller R. M. et al., Atmos. Chem. Phys., 21, 14815-14831, 2021*)*
Fig. 9: (a) Schematic representation of an individual layer of honeycomb-like carbon called graphene and how it is rolled to form a carbon nanotube
   (b)-(d) TEM images of single-, double- and multi-walled carbon nanotubes, respectively
Fig. 10: TEM images of activated carbon
Fig. 11: TEM image of activated graphene nanomaterial as used in the present invention

### DESCRIPTION

The instant invention relates to a method (also designated sometimes as "process" throughout the present description) for transforming solid plastic waste into linear, ramified and/or cyclic saturated and/or unsaturated hydrocarbons, having from 1 to 20 carbon atoms, characterized in that the method comprises the steps of:
a) introducing solid plastic waste in a receptacle provided with an outlet, a heat source and a condenser, wherein the solid plastic waste may be a specific type of solid plastic waste or be a mixture of different plastic materials;
b) adding an activated graphene nanomaterial in an amount of between 0.001-1 wt.% with regard to the amount of solid plastic waste, wherein the activated graphene nanomaterial:
   i) comprises at least 90% of carbon, as measured according to energy dispersive X-ray analysis;
   ii) is insoluble in water;
   iii) presents both a D band, corresponding to sp³ orbital hybridization, and a G band, corresponding to sp2 orbital hybridization, when submitted to RAMAN spectroscopy, wherein the ratio of the intensity of the D band over the G band (I_{D}/I_{G}) is below 1.
c) heating the receptacle to a temperature from 50 to 400 °C, thereby generating gases.
d) collecting the generated gases through the outlet;
e) refrigerating the gases through a gas refrigerating unit, until condensation of at least a fraction thereof, to obtain a liquid fraction comprising linear, ramified and/or cyclic saturated and/or unsaturated hydrocarbons in liquid form and, optionally, a gaseous fraction comprising linear, ramified and/or cyclic, saturated and/or unsaturated, hydrocarbons in gas form.

The gases generated in step c) may be condensable or be a mixture of condensable and non condensable gases.

The method according to the present invention is advantageous over previous processes known in the state of the art, as in one single step, without the need of post-processing, e.g., by a purification process, linear, ramified and/or cyclic saturated and/or unsaturated hydrocarbons are formed (including, e.g., aromatic hydrocarbons or hydrocarbons of up to 24 carbon atoms, e.g., the saturated hydrocarbon C24H50 tetracosane). Such species can be used to form chains of products that require C-H skeletons, in, for example, plastic-waste-to-plastic processes, to produce prime-polymer grade compounds. The obtained hydrocarbons can also be used as compounds for blends in fuels or drop-in use for energy purposes.

A process according to the present invention represents a novel production system with lower energy cost, without generating a carbon footprint.

The method according to the present invention requires, according to step a), introducing solid plastic waste in a receptacle provided with an outlet, a heat source and a condenser, wherein the solid plastic waste may be a specific type of solid plastic waste or be a mixture of different plastic materials.

Advantageously, the method according to the present invention may process solid plastic waste without requiring any specific separation process or pre-treatment. For instance, mixtures of different plastic materials may be used. Nonetheless, if so desired, the process according to the present invention may be used to process a specific type of solid plastic waste, e.g., which may have been separated from a mixture of different plastic materials, in e.g. a waste processing plant.

Further, the solid plastic waste, either being a specific type of solid plastic waste, or a mixture of different plastic materials, may be comminuted, e.g., in a shredder, a granulator or a grinder.

In several embodiments, the solid plastic waste may be in powder form, in the form of pieces with a length of from 5 to 100 mm, or a mixture thereof; that is, the solid waste may be a mixture of solid plastic waste in powder form and solid plastic waste in the form of pieces with a length of from 5 to 100 nm.

Examples of solid plastic waste, which as noted above, may be both a specific type of solid plastic waste or be a mixture of different plastic materials, include plastic waste selected from e.g. polyethylene (PE), low density polyethylene (LDPE), high density polyethylene (HDPE), polypropylene (PP), polypropylene ethylene terephthalate (PET), poly-vinyl chloride (PVC), polystyrene (PS), polyamide, nylon, acrylonitrile-butadienestyrene (ABS), ethylvinyl alcohol (EVOH), melamine formaldehyde (MF), Polybutadiene (PBD), Polybutylene (PB), Polycarbonate (PC), HIPS (high impact polystyrene), Polyacetal, (acetal) Polyurethane, (PU), (polytetrafluoroethylene) PTFE. Preferably, the plastic waste, the solid plastic waste or the plastic materials are selected from polyethylene, low density polyethylene, high density polyethylene, polyvinyl chloride, polypropylene, polystyrene or mixtures of two or more thereof. That is, when the solid plastic waste is a specific type of solid plastic waste, according to a particular embodiment, such waste is preferably selected from any one of the above provided lists of materials; when the solid plastic waste is a mixture of different plastic materials, according to a particular embodiment, such plastic materials may be a mixture of plastic materials selected from any one of the above provided lists of materials.

In the method according to the present invention the solid plastic waste is introduced in a receptacle provided with an outlet, a heat source and a condenser.

Suitable receptacles are known to a skilled person.

In several embodiments the heat source may be selected from an external heat source and integrated heat source, such as direct flame, heating mantles, induction, microwave or other sources.

In several embodiments the outlet may be provided with a valve, to regulate the flow of gases going through the outlet.

In several embodiments the condenser may be selected from, e.g., an Allihn condenser, a Liebig-West condenser or a spiral condenser or industrial scale equivalents thereof.

Optionally, the receptacle may be provided with a fractionating column (e.g., a Vigreux column or industrial equivalents thereof).

As a mode of example, the receptacle may be a round-bottom flask or a reactor. In a particular embodiment, the receptacle may be a reactor provided with means for temperature and pressure control.

The volume of the receptacle may vary depending on the desired scale of the process. As a mode of example, a receptacle may have the capacity to contain and process from 0.1 kg to 5000 kg of solid plastic waste, in particular from 1 kg to 2500 kg, more in particular from 10 kg to 1000 kg.

The method according to the present invention comprises a step b) of adding an activated graphene nanomaterial to the receptacle. The activated graphene nanomaterial may be added to the receptacle prior to, simultaneously or after introducing the solid plastic waste to the receptacle. It may be preferred to add the activated graphene nanomaterial after introducing the solid plastic, to facilitate the distribution of the activated graphene nanomaterial over the plastic material.

This activated graphene nanomaterial is added in an amount of from 0.001 to 1 wt.% with regard to the amount of solid plastic waste. In particular, the amount of activated graphene nanomaterial may be from 0.01 to 0.95 wt.%, more in particular from 0.1 to 0.90 wt.% and more in particular from 0.2 to 0.80 wt.%. Such amounts have been found to favour the transformation of the solid plastic waste into hydrocarbons. Higher amounts of activated graphene nanomaterial, even though do not seem to adversely affect the transformation, have not been found to further improve the same; in order to reduce costs, amounts in the lower range are preferred.

The activated graphene nanomaterial used in the method according to the present invention has the following particular features, which differentiate such activated graphene nanomaterial from other known in the art carbon-based nanomaterials which have been used in previous attempts to transform solid plastic waste, e.g., graphene which has not been subjected to an activation according to the present disclosure. The activated graphene nanomaterial used in the present method:
i) comprises at least 90% of carbon, as measured according to energy dispersive X-ray analysis;
ii) is insoluble in water;
iii) presents both a D band, corresponding to sp³ orbital hybridization, and a G band, corresponding to sp2 orbital hybridization, when submitted to RAMAN spectroscopy, wherein ratio of the intensity of the D band over the G band (I_{D}/I_{G}) is below 1.

According to particular embodiments, the activated graphene nanomaterial used in the method of the invention at least 92% of carbon, as measured according to energy dispersive X-ray analysis, preferably at least 95% of carbon, more preferably at least 98% carbon, most preferably at least 99% carbon.

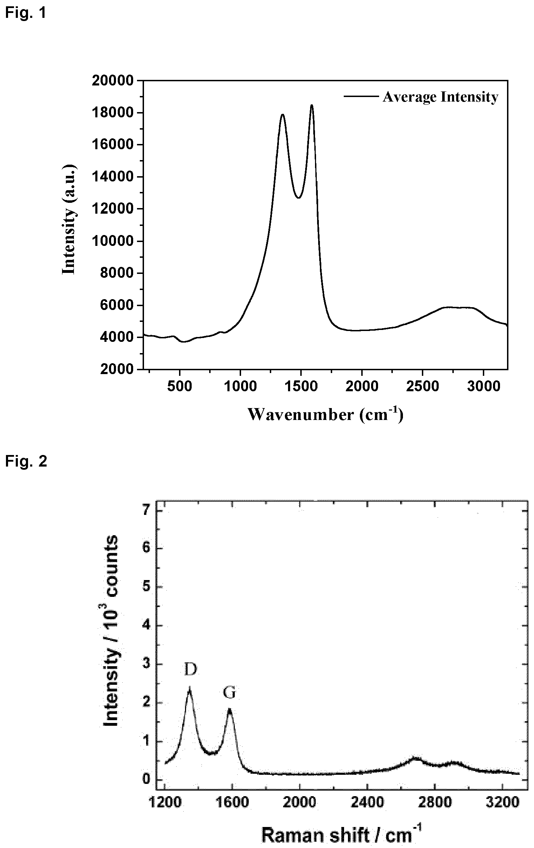

Fig. 1 shows the average result of a RAMAN spectroscopy for several samples of the activated graphene nanomaterial used in the method of the present invention, wherein the presence of the D and G bands may clearly be seen. As may be observed, the intensity/height of band G is higher than the intensity/height of band D, the I_{D}/I_{G} ratio thus being below 1. Reference is also made to Example 6.

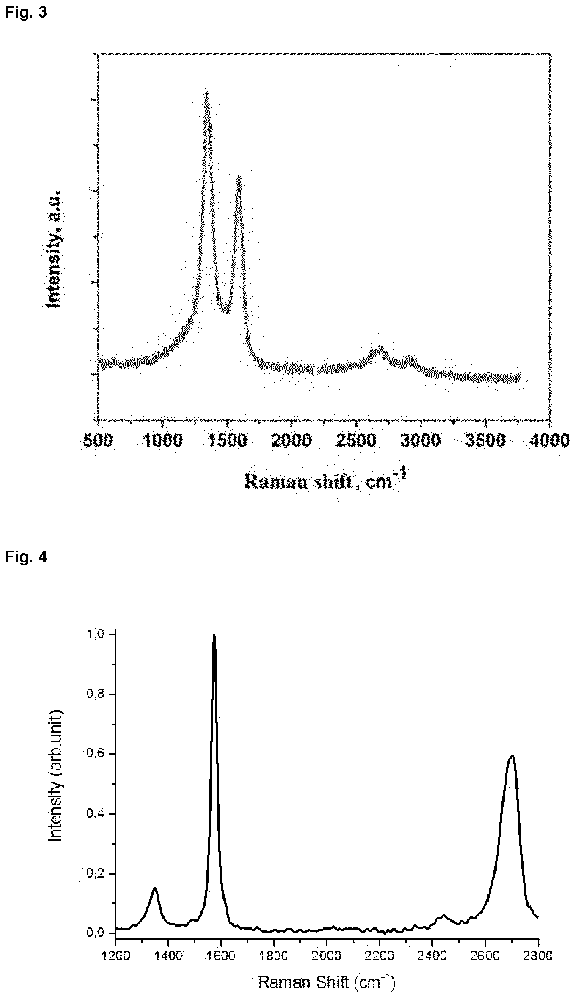

In contrast, Fig. 2 and 3 show the RAMAN spectroscopy of commercial graphene nanomaterial (graphene nanopowder AO-1 from Graphene Supermarket), before being submitted to an activation as disclosed herein (sources, respectively: Lilloja et al., Catalysts (2016), 6, 108 and *www.qraphene-supermarket.com);* Fig. 4 shows the RAMAN spectroscopy for a different commercial graphene nanomaterial (graphene nanoplatelets from Nanografi, before being submitted to an activation as disclosed herein (source: *www.nanografi.com).*

As may be observed, in the case of non activated graphene nanomaterials of different commercial origins, the intensity/height of band D is higher that the intensity/height of band G, the I_{D}/I_{G} ratio thus being above 1, and thus differing from the activated graphene nanomaterial used in the method according to the present invention.

It has been described in the art that the reactivity of graphene may be increased by covalent modification thereof: carbons having a sp² configuration, when transformed into a sp³ configuration, which would lead to a tetrahedral geometry, and form longer bonds. Such a transformation does not only affect the carbon actually transformed into a sp³ configuration, but creates also a geometric distortion which extends over multiple positions in the network. Such a functionalization has been described for example in EP3486214B1. Nevertheless, the activation as disclosed herein is not a covalent modification.

The activated graphene nanomaterial used in the method of the invention may be prepared by submitting commercial graphene to extreme temperatures.

For example, a commercially available graphene (e.g., graphene nanoplatelets 1034343-98-0; or Graphene Nanopowder AO-1, available from Graphene Supermarket) or other carbon materials (e.g., carbon black) may be submitted to one or more cycles of refrigerating - heating. One cycle of refrigerating - heating would comprise refrigeration to temperatures below 0 °C, particularly to temperatures from - 25 °C to 0° C, and subsequent heating to temperatures above 750 °C, particularly between 750 °C and 1100 °C. As indicated, the graphene may be submitted to one or several refrigerating - heating cycles as defined above, particularly between 1 and 50 cycles. The temperatures for refrigeration and heating may be the same or different from one cycle to another.

Without wishing to being bound to theory, such refrigerating - heating cycles appear to achieve an activation of graphene, providing an activated graphene nanomaterial as used in the method as claimed herein.

As a mode of example, an activated graphene nanomaterial as used in a method as described herein may also be prepared following the indications provided in publication WO2017/201632, starting from carbon black.

As noted above, and without wishing to being bound to theory, the refrigeration - heating cycles appear to cause an activation of graphene, probably by transforming the sp² configuration of some of the carbon atoms of graphene into a sp³ configuration. In any case, the activated graphene nanomaterial used in the method according to the present invention, has been found to surprisingly and unexpectedly improve the transformation of solid plastic waste to obtain hydrocarbon mixtures of interest (e.g., through cascade reaction). Such an improvement has been observed in comparison to the absence of any added carbon nanomaterials, or to the presence of other kinds of carbon nanomaterials, e.g. commercial graphene flakes before being activated according to the present disclosure, carbon black or carbon nanotubes (reference is made to Example 5).

The activated graphene nanomaterial according to the present invention is clearly different from carbonaceous materials which are known in the art.

In no case the term "activated" in "activated graphene nanomaterial" should be interpreted in the sense of "active" or "activated" in e.g. "active carbon" or "activated carbon" as used in the state of the art: it is known in the art that carbon may be activated either chemically or physically, thus providing "active carbon":
- chemical activation: an acid is mixed with the raw material, e.g. coal, at moderate temperature, around 400°C; an important problem of this kind of activation is that when using a dehydrating agent, for example zinc chloride, the Zinc residues can remain in the final product, even after washing.
- physical or steam activation: a carbonized material, such as, for example, carbon black, is treated with a mixture of combustion gases and steam at high temperature to activate. These activated carbonaceous materials can be of different origins, such as charcoal itself, coconut shells, wood shells, walnut shells, etc.

Such activated carbonaceous materials, when seen under electron microscopy, will show up as a carbon structure with large amounts of mesopores; that is, large pores, in order to increase the contact surface. Some graphitic type plaques may also appear, forming micropores, basically to allow and favour an absorption process of different chemical materials.

These activated carbonaceous materials may serve as a filter element for different chemical materials, such as gases, liquids, oils, by absorption of different kinds of molecules. Such materials basically consist of chains of carbon and hydrogen atoms, and display the property of adhering to its walls molecules which flow, i.e., to absorb such molecules. This is called the principle of absorption, the activated carbonaceous materials are thus absorbent and the molecule that will remain inside, trapped in the mesopores of the activated carbonaceous materials, is called adsorbate.

Such activated carbonaceous materials will retain pollutants, for example, in sugar refining coal they will retain proteins; in the discoloration of vegetable, they will retain oils; or they will retain glucose, for decolonization and deodorization of alcoholic beverages.

In any case, such activated carbonaceous materials are inert, they are in no case capable of generating a chemical reaction; their function is to absorb molecules, especially organic molecules, in their micropores.

The carbon atoms of such activated carbonaceous materials, like is also the case in graphene, are held together by covalent bonds: each carbon atom shares an electron with another four carbon atoms, which will distribute their four bonds in all possible directions. But, even if they are linked, they will generate these mesopores. Which is different from generating a nanotube structure. This imbalance within them makes them able to trap a molecule.

Within the Van der Waals forces, the London Dispersion Force is strong enough to retain the absorbent material, but not strong enough to be considered a chemical bond of the carbonaceous material with the absorbed molecule, which would mean the generation of a new molecular structure; therefore, the absorption is reversible and the absorbed molecules may be removed, and the activated carbonaceous material can be recycled for reuse.

Such activated carbonaceous material, the same as also common carbon, graphene, oxides of graphene, graphene nanotubes, etc, all these types of carbon based materials are not capable of reacting with other compounds, and maintain their inertness, and are thus available as a filtering agent, as an agent that helps to maintain the cohesion of mixtures by addition thereof, for example silicate plus graphene, so that they are provided with a support, but in no case an ability as carbon donor has been described.

In contrast, the activated graphene nanomaterial used according to the present invention is activated, in the sense that it has been observed that it seems to be able to chemically react with other molecules; without wishing to be bound to theory, it seems as if the activated graphene nanomaterial used according to the present invention is capable to donate carbon atoms.

The activated graphene nanomaterial according to the use of the present invention, if checked under a scanning microscope, it can be observed that it corresponds to a disordered carbon that apparently could appear similar as an activated carbonaceous material, an absorbent carbonaceous material as mentioned earlier.

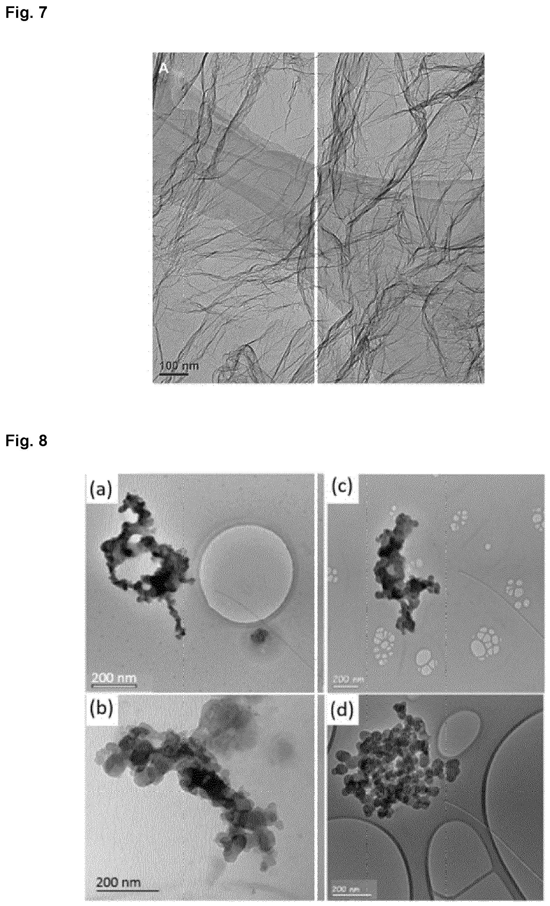

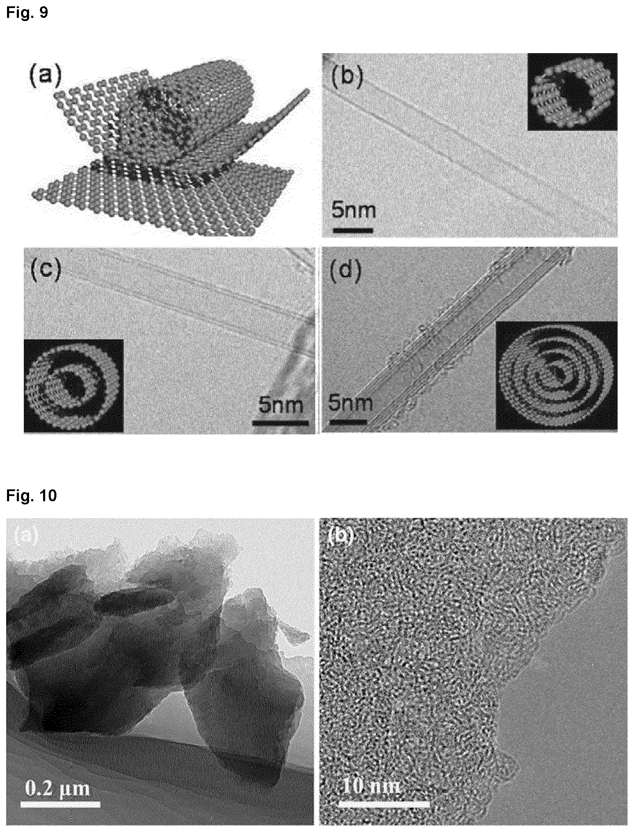

However, when the activated graphene nanomaterial is observed by transmission electron microscopy (TEM), surprisingly a total absence of mesopores may be seen, and an ordered structure may be seen, comprising an ordered arrangement of what could be called nano-onions. In any case, said activated graphene nanomaterial is clearly significantly different from other carbonaceous materials, of any type, including graphene. Reference is made to Figures 7 to 10, wherein TEM images of graphene, carbon black particle aggregates, single-, double-, and multi-walled carbon nanotubes and activated carbon are reproduced.

Known types of graphene, including e.g. graphene, graphene oxides or graphene on silicon plates, comprise a clearly disordered structure, generally comprising nanotubes.

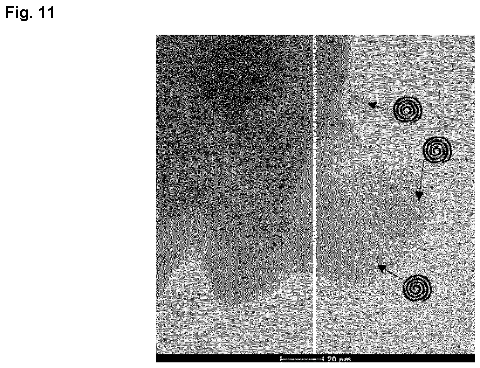

In contrast, in TEM of the activated graphene nanomaterial used according to the present invention a perfect arrangement may be observed, both in the circular arrangement of the carbons and in the spirals that resemble nano-onions. Reference is made to Figure 11, wherein a TEM image of the activated graphene nanomaterial as used in the present invention is reproduced. This structural differences seem to be relevant to the activity of the activated graphene nanomaterial, and seems to provide the nanomaterial with the ability of immediately forming part of a reaction at low temperature.

Also, it has been observed that when the activated graphene nanomaterial as used in the present invention is subjected to high temperatures, e.g. between 300 and 500 °C, i.e. around 400°C, the nanomaterial is able to disperse the high temperatures, maintaining the original room temperature inside the material, and outside it can be 400°C, something that does not happen with the rest of other carbon materials.

Therefore, according to an embodiment, the activated graphene nanomaterial used in the present invention may be designated also as "activated carbon-donating graphene nanomaterial".

A method according to the present invention comprises a step c) of heating the receptacle to a temperature from 50 to 400 °C, thereby generating gases. The exact temperature may vary depending on the composition of the solid plastic waste. Nonetheless, these gasification temperatures have been found to be generally lower than in other processes for the transformation of solid plastic waste to hydrocarbons. In several embodiments, the temperature may be from 60 to 350 °C, from 70 to 400 °C, more in particular from 70 to 300 °C, and yet more in particular from 80 to 275 °C.

At these temperatures, gasification gives rise to cascade reactions of the gasified molecules, during the residence of the gases in the receptacle, to form hydrocarbons of interest.

According to a particular embodiment, when the solid plastic waste is a specific type of solid plastic waste, the heating temperature of the receptacle in step c) is below the melt temperature Tₘ of such solid plastic waste.

According to a further embodiment, when the solid plastic waste is a mixture of different plastic materials, the heating temperature of the receptacle in step c) is below the melt temperature Tₘ of the plastic material in the mixture which has the lowest melt temperature.

The melt temperature of a polymer or plastic is the temperature at which the structure of polymers disappears. Generally, polymers do not have a sharp, exact melt temperature, but have a broad melt temperature range. This is due to the fact that polymers comprise long polymer chains, and generally, one polymer sample has chains with different chain lengths; polymer chains with different lengths need different temperatures to melt, since they require different energy to melt. This is the main reason for the broad melt temperature in polymers. Further, branching and imperfection of formed crystallites also lead to not having a sharp melt temperature in polymers. A method of determination thereof is disclosed e.g. in Grigorescu et al., Recycling 2019, 4, 32. In the following, a table comprising

The melting points of polymeric materials are known in the art, and in following Table 1 the melt temperature Tₘ of the main plastic materials are reproduced (data extracted from Grigorescu et al., Recycling 2019, 4, 32 and Kazemi et al., Waste Management 33 (2013) 1898-1905*):*

**Table 1**

| Polymer | Melt temperature [Tₘ (°C)]) |
|---|---|
| Low Density Polyethylene (LDPE) | 100-115 |
| Polyvinyl Chloride (PVC) | 210 |
| Polypropylene (PP) | 160-170 |
| Polystyrene (PS) | 240 |
| Polyethylene | 135 |
| High Density Polyethylene (HDPE) | 125-135 |
| Polyethylene terephthalate | 245 |

According to further embodiments, when the solid plastic waste is a specific type of solid plastic waste, the heating temperature of the receptacle in step c) is below the glass transition temperature T_{g} of such solid plastic waste.

In another embodiment, when the solid plastic waste is a mixture of different plastic materials, the heating temperature of the receptacle in step c) is below the glass transition temperature T_{g} of the plastic material in the mixture which has the lowest glass transition temperature.

The glass transition is the gradual and reversible transition in amorphous materials from a hard and relatively brittle "glassy" state to a viscous or rubbery state as temperature increases. The glass transition temperature T_{g} of a material is the temperature range in which this glass transition occurs. This temperature is always less than the melting temperature, Tₘ, of the crystalline state of the material, if it exists.

That is, the T_{g} refers to a temperature at which conformational changes of the polymers occur, while the Tₘ refers to a temperature wherein chemical changes occur.

The T_{g} of the polymers are generally positive, but in some cases they can be negative according to the composition of their aggregates, as for example in LDPE. It is in these plastics where the Kauzmann paradox operates.

In the cases where the T_{g} of a polymer is negative, it should be understood as the point at which elasticity is lost and it becomes crystalline when the temperature is decreased.

As noted above, the method according to the present invention may be carried out at temperatures which are below the melting point of the solid plastic waste or even below the glass transition temperature T_{g} of the solid plastic waste.

The pressure during heating may vary. For instance, the outlet of receptacle may be open to the atmosphere, and heating may be performed at atmospheric pressure or the outlet may be provided with a valve which may be used to regulate the pressure. As a mode of example, in several embodiments the pressure may be from 0.3 bar (i.e., 30 kPa) to 10 bar (i.e., 1000 kPa), in particular from 0.4 to 9 bar (i.e., from 40 to 900 kPa), more in particular up to 5 bar. In several embodiments the pressure may be from 0.4 to 1.1 bar (i.e., from 40 to 110 kPa). In several embodiments the pressure may be at around atmospheric pressure, e.g., from 0.8 to 1.1 ba (i.e., from 80 kPa to 110 kPa). The pressure may also vary during heating, e.g., the pressure may increase as the amount of gases generated increases.

The heating temperature may be maintained or increased to obtain a first drop of liquid fraction and until no more liquid fraction appears to be formed.

Heating may be performed in one or more steps, e.g. in 2, 3, 4 or 5 steps. The temperature may vary from one step to the other, or be the same.

For instance, in a first heating step a first drop of liquid hydrocarbon mixture may appear at from 3 minutes to 180 minutes after heating started, in particular from 5 to 160 minutes and more in particular from 10 to 140 minutes. The heating temperature may be maintained or increased until no more liquid fraction appears to be formed.

In several embodiments, heating may be stopped after such first heating step.

In several other embodiments heating may be maintained, increased, or re-started after the first heating step, in a second heating step, to reach a higher temperature or a lower temperature with regard to the first heating step. Such a second heating step may be performed if, e.g., after a first heating step the amount of residual solid plastic waste is still significant.

For instance, in a second heating step a first drop of liquid hydrocarbon mixture may also appear at from 3 minutes to 75 minutes after heating started, in particular from 5 to 60 minutes and more in particular from 10 to 50 minutes. The heating temperature may be maintained or increased until no more liquid fraction appears to be formed.

Additional heating steps may be performed in the same manner.

A first and second or subsequent heating steps may be performed in the same receptacle or in different receptacles. Further, the setup of the receptacle may be the same or different for the first, second and/or subsequent heating steps. For instance, in a first heating step the receptacle may be provided with a fractionating column and in the second heating step the receptacle may be provided without a fractionating column.

According to a particular embodiment, heating may be performed under inert atmosphere. Accordingly, in a method as described herein in step c) an inert atmosphere may be provided. In several embodiments, such inert atmosphere may be provided by purging the receptacle with argon or nitrogen, preferably argon.

A method as described herein comprises a step d) of collecting the generated gases through the outlet. In embodiments where the outlet is provided with a valve, collecting the generated gases may comprise opening the valve.

A method as described herein comprises a step e) of refrigerating the gases through a gas refrigerating unit, until condensation of at least a fraction thereof, to obtain a liquid fraction comprising linear, ramified and/or cyclic saturated and/or unsaturated hydrocarbons in liquid form and, optionally, a gaseous fraction comprising linear ramified and/or cyclic saturated and/or unsaturated hydrocarbons in gas form.

Refrigerating may be performed by methods known to a skilled person, e.g., by allowing the gas to go through the condenser provided for the receptacle.

Hydrocarbons obtained with a process as described herein have from 1 to 24 carbon atoms, and may particularly have from 1 to 10 carbon atoms.

The nature of hydrocarbons obtained in liquid form or in gas form will typically be different. Typically, hydrocarbons obtained in gas form have lower number of carbon atoms and hydrocarbons obtained in gas form have a higher number of carbon atoms. For instance, hydrocarbons obtained in gas form may particularly have from 1 to 6 carbon atoms, in particular from 1 to 4 carbon atoms. On the other hand, hydrocarbons obtained in liquid form may particularly have from 4 to 24 carbon atoms, in particular from 5 to 22 carbon atoms and more in particular from 6 to 20 carbon atoms.

Hydrocarbons obtained with a process as described herein may be linear, ramified and/or cyclic saturated and/or unsaturated hydrocarbons. Hydrocarbons obtained may also be oxygenated or chlorinated.

In several embodiments the hydrocarbons may comprise saturated and/or unsaturated linear and/or ramified hydrocarbons. In several particular embodiments the hydrocarbons may comprise aliphatic hydrocarbons, e.g., hexane, octane, octene, nonane, nonene, decane, decene, undecane, etc.. up until tetracosane a C24H50 saturated linear compound).

In several embodiments the hydrocarbons may comprise saturated and/or unsaturated cyclic hydrocarbons, in particular embodiments the hydrocarbons may comprise unsaturated cyclic hydrocarbons, and more in particular aromatic hydrocarbons. For instance, monoaromatic hydrocarbons (e.g., benzene, toluene, ethylbenzene, ...) or polyaromatic hydrocarbons (e.g., naphthalene, etc...).

In several embodiments the hydrocarbons may comprise oxygenated hydrocarbons, e.g., oxygenated aliphatic compounds or oxygenated aromatic compounds.

Typically, hydrocarbons obtained with a process as described herein will comprise a mixture of hydrocarbons.

In a process as described herein, the formation of hydrocarbons may be accompanied by other chemical species, such as CO, CO₂, N₂, a minority of sulphur compounds, nitrogenous compounds and chlorinated compounds

A mixture of hydrocarbons in liquid form may typically comprise C5 to C24 hydrocarbons, in particular from C6 to C22, and more in particular from C7 to C20 hydrocarbons.

A mixture of hydrocarbons in liquid form may typically comprise aliphatic hydrocarbons, oxygenated aliphatic hydrocarbons (ALIPH), monoaromatic hydrocarbons (MAH), polyaromatic hydrocarbons (PAH) and oxygenated aromatic hydrocarbons (O-ALlPH) .

The exact proportion of the different components will also depend on the synthetic plastic waste material being processed, especially if the starting synthetic plastic waste has aromatic monomers. For instance: an exemplary composition for a plastic waste material with a majority of LDPE, could be, e.g., of from 25 to 50 wt.% of ALIPH, from 2 to 35 wt.% of O-ALIPH, from 0.1 to 2 wt.% of MAH and from 0.05 to 1 wt.% of PAH.

An exemplary mixture of hydrocarbons in gas form may comprise from 1 to 15 mol% of methane, from 0.3 to 5 mol% of ethane, 1 to 8 mol% of ethylene, 0.5 to 8 mol% of propylene, 0.2 to 2 mol % of propane, 0.2 to 3 mol % of 1-butene, and 0.2 to 2 mol % of isobutylene, 1 to 5 mol% of C6 and higher hydrocarbons, accompanied with from 10 to 20 mol% of Carbon monoxide and from 25 to 50 mol % of carbon dioxide, 0.1 to 8 mol% of hydrogen, 0.25 to 3 mol % of oxygen, 1 to 10 mol % of nitrogen, with the remaining mol % of the mixture comprising other gases each present in an amount of equal or less than 0.3 mol% including other hydrocarbons selected from isobutane, n-butane, isopentane, acetylene, methylacetylene, propadiene, trans-2- butene, cis-2-butene, 1,3-butadiene. Sulphur may be typically present in the form of sulphur, mercaptane or hydrogen sulphur in amounts of 5 to 400 ppm (mol), and ammonia in amounts of less than 0.25 ppm (mol).

The liquid fraction and, if any, the gas fraction can be collected for subsequent use. As previously discussed, a method as described herein advantageously provides a liquid fraction comprising linear, ramified and/or cyclic saturated and/or unsaturated hydrocarbons (including, e.g., aromatic hydrocarbons or hydrocarbons of up to 24 carbon atoms, e.g., the saturated hydrocarbon C24H50 tetracosane) in one single step, without the need of post-processing, e.g., by a purification process. Nonetheless, if desired, the liquid fraction obtained may be subjected to a distillation, e.g., to separate lighter hydrocarbons (e.g., with distillation points from about 50 to about 150 °C) from heavier hydrocarbons (e.g., with distillation points from about 150 to about 350 °C).

Such species can be used to form chains of products that require C-H skeletons, in, for example, plastic-waste-to-plastic processes, to produce prime-polymer grade compounds. The obtained hydrocarbons can also be used as compounds for blends in fuels or drop-in use for energy purposes.

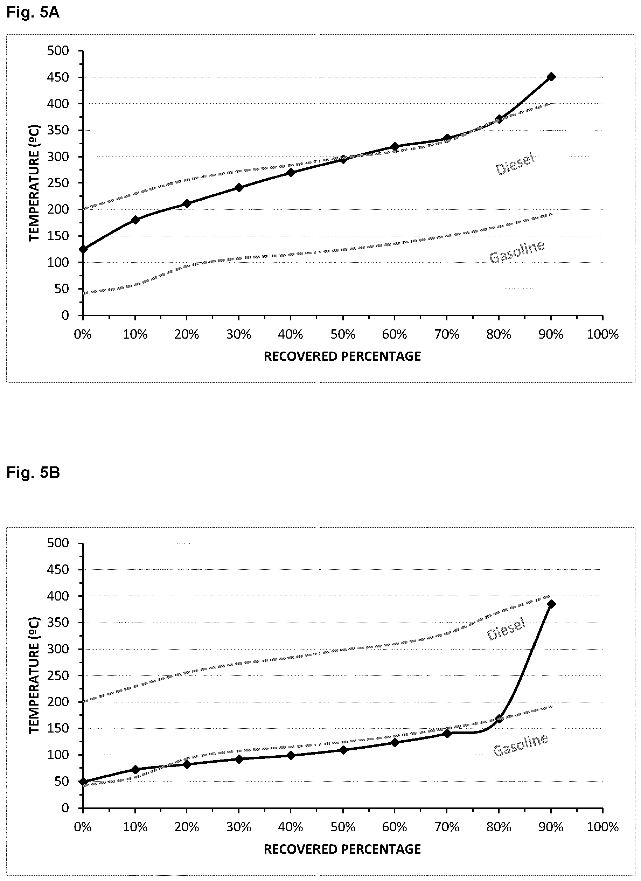

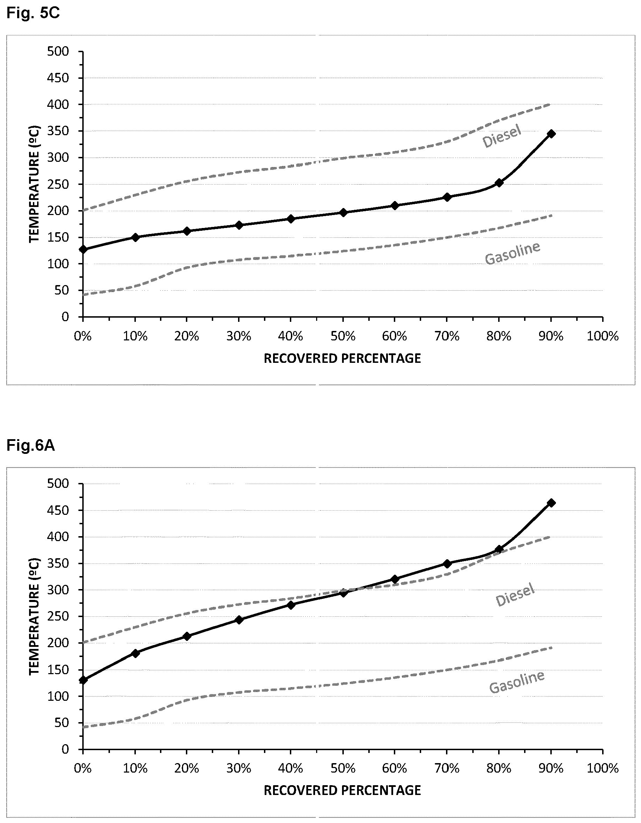

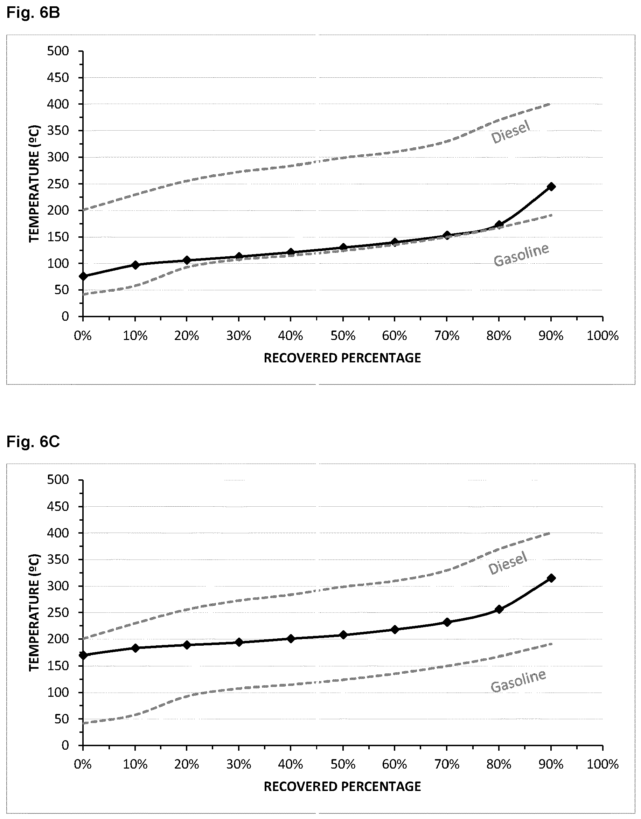

It has been found that liquid fractions comprising linear, ramified and/or cyclic saturated and/or unsaturated hydrocarbons obtained with a method as described herein have a distillation profile, as determined by, e.g., the standard method defined in ASTM D-86-93: Standard Test Method for Distillation of Petroleum Products, which is close to diesel and gasoline distillation curves. Reference is made to, e.g., comparative example 1, example 1 and figures 5 and 6.

On the other, part or the totality the gas fraction, if any, may be collected for use as a gas fuel, in several embodiments part or the totality the gas fraction the gas fraction may be used in a heat source for heating in step c) of a process as described herein. Additionally, or alternatively, part or the totality of the gas fraction may be re-introduced into the receptacle for reforming into higher hydrocarbons, to further increase the liquid fraction obtained with a process as described herein.

Further, as also previously discussed, if a gaseous fraction comprising linear, ramified and/or cyclic saturated and/or unsaturated hydrocarbons if any, can also be used in the heating step c) of the same method, as a fuel for the heat source, and/or may be recycled into the receptacle, e.g., to increase the production of a liquid fraction. Thereby, the carbon footprint of the process may be reduced.

With a method as described herein higher recovery yields of liquid fractions comprising hydrocarbons have been observed than with other reported methods., or similar methods without using an activated graphene nanomaterial as described herein, see, e.g., examples 1-4, even if using other carbon sources. Reference is made to, e.g., example 5.

For instance, recovery yields of liquid hydrocarbon over the total amount of synthetic plastic material may be from 10 to 75 wt.%, in particular from 15 to 70 wt.% and more in particular from 20 to 68 wt.%. Recovery yields of liquid product comprising hydrocarbons over the total amount of gasified synthetic plastic material may be from 30 to 95 wt.% in particular from 35 to 93 wt.% and more in particular from 40 to 90 wt.%.

### EXAMPLES

### Materials

Carbon Nanotubes: Multi-walled Carbon Nanotube Powder, commercially obtained from Graphene Supermarket
Graphene Flakes ("AvPat 2" obtained from Avanzare)
Carbon Black (obtained from Penta Carbon brand

### Apparatus used to perform the method according to the invention

Different kinds of plastic were processed in two steps:
Step 1: A standard laboratory distillation apparatus comprising a fractionating column was used.
Step 2: A standard laboratory distillation apparatus without a fractionating column was used.

Both distillation apparatuses comprised a round-bottom flask equipped with a heating jacket, a condenser equipped with refrigeration, and an Erlenmeyer flask to collect the final product; the distillation apparatus for the first step comprised a fractionating column attached to the flask before the condenser.

### Comparative Example 1: LDPE

Step 1: 1200 g of LDPE were introduced in the flask, equipped with a fractionating column, and heating was initiated. The time to obtain the first drop of a liquid fraction comprising hydrocarbon compounds was 40 minutes. The average temperature in the flask was 200 °C.

Step 2: The plastic remaining in the flask after Step 1 was heated again. The time to obtain the first drop of a liquid fraction comprising hydrocarbon compounds was 34 minutes. The average temperature in the flask was 221 °C.

In total, i.e., both Steps 1 and 2 together, 768 g of LDPE were gasified during the method. 477 g of product were collected. Therefore, the yield of collected product over gasified plastic was 62.1 wt. %, and the yield of collected product over total plastic was 39.8 wt. %.

The raw product from combining the products of step 1 and step 2 was distilled to provide a first fraction comprising lower hydrocarbons, and a second fraction comprising higher hydrocarbons. The distillation curves from the raw product, the first fraction and the second fraction are shown in Figure 5 A, 5B and 5C respectively. As in can be seen the raw mixture has a distillation curve that sits between a gasoline distillation curve and a diesel distillation curve (Figure 5A). The first fraction has a distillation curve similar to that of gasoline (Figure 5B) and the second fraction has a distillation curve similar to that of diesel (Figure 5C).

### Example 1 (according to the invention): LDPE and activated graphene nanomaterial

Step 1: 1200 g of LDPE proceeding from industrial waste and 0.5 gr of activated graphene nanomaterial were introduced in the flask, equipped with a fractionating column, and heating was initiated. The time to obtain the first drop a liquid fraction comprising hydrocarbon compounds was 46 minutes. The average temperature in the flask was 199 °C.

Step 2: The plastic remaining in the flask after Step 1 was heated again. The time to obtain the first drop of a liquid fraction comprising hydrocarbon compounds was 20 minutes. The average temperature in the flask was 268 °C.

In total, i.e., both Steps 1 and 2 together, 854 g of LDPE were gasified during the method. 765 g of product were collected. Therefore, the yield of collected product over gasified film was 89.6 wt. %, and the yield of collected product over total plastic was 63.8 wt. %.

Therefore, the method according to the invention improved both the amount of gasified plastic, and the amount of collected product. Particularly, 86 g more plastic was gasified (an improvement of 11.2 %), and 288 g more product was collected (an improvement of 60.4 %).

The raw product from combining the products of step 1 and step 2 was distilled to provide a first fraction comprising lower hydrocarbons, and a second fraction comprising higher hydrocarbons. The distillation curves from the raw product, the first fraction and the second fraction are shown in Figure 6A, 6B and 6C respectively. As in can be seen the raw mixture has a distillation curve that sits between a gasoline distillation curve and a diesel distillation curve (Figure 6A). The first fraction has a distillation curve similar to that of gasoline (Figure 6B) and the second fraction has a distillation curve similar to that of diesel (Figure 6C).

The following table shows the composition of the raw and distilled first and second fractions of comparative example 1 and example 1 as determined by GC-MS:

| | Comparative Example 1 (without activated graphene nanomaterial) | | | Example 1 (with activated graphene nanomaterial | | |
|---|---|---|---|---|---|---|
| Comp* (%) | Raw | Distilled fraction 1 | Distilled fraction 2 | Raw | Distilled fraction 1 | Distilled fraction 2 |
| MAH | - | 0.4 | 0.2 | - | 0.5 | - |
| PAH | - | 0.1 | - | - | 0.1 | - |
| ALIPH | 39.9 | 39.0 | 44.0 | 37.3 | 38.8 | 43.2 |
| O-AR | - | - | - | - | - | - |
| O-ALIPH | 21.4 | 12.0 | 9.1 | 26.6 | 12.4 | 2.5 |
| N-comp | - | 0.7 | - | - | - | - |
| Cl-comp | - | - | - | - | - | - |
| Total | 61.3 | 52.3 | 53.4 | 63.9 | 51.9 | 45.7 |

| | | | | | | |
|---|---|---|---|---|---|---|
| * Components: in wt.% with respect to the sample analyzed: monoaromatic hydrocarbons (MAH), polyaromatic hydrocarbons (PAH), aliphatic hydrocarbons (ALIPH), oxygenated aromatic hydrocarbons (O-AR), oxygenated aliphatic hydrocarbons (O -ALIPH), nitrogenous compounds (N-comp) and chlorinated compounds (Cl-comp). | | | | | | |

An elemental analysis was carried out for the raw products of Comparative example 1 (without activated graphene nanomaterial) and example 1 (with activated graphene nanomaterial). The results are shown in the following table

| Elemental Analysis | | | | | |
|---|---|---|---|---|---|
| N° | c | H | N | S | Others* |
| Comparative Example 1 (without activated graphene nanomaterial) | | | | | |
| 1 | 84.75 | 14.45 | 0.62 | - | 0.18 |
| 2 | 84.91 | 14.48 | 0.34 | - | 0.27 |

| Example 1 (with activated graphene nanomaterial) | | | | | |
|---|---|---|---|---|---|
| 1 | 85.39 | 14.37 | 0.19 | - | 0.05 |
| 2 | 84.98 | 14.63 | 0.33 | - | 0.06 |

| | | | | | |
|---|---|---|---|---|---|
| * Others: includes oxygen, halogens and ash if any | | | | | |

The composition of the raw products of comparative Example 1 and example 1 was analyzed by GC-MS in order to identify the individual hydrocarbons. The results are shown in the following tables.

Composition of Raw product of Comparative Example 1 (without activated graphene nanomaterial)

| | Formula | Area % | [wt%] |
|---|---|---|---|
| Heptadecane | C17H36 | 3.76 | 2.24 |
| Hexadecane | C16H34 | 3.68 | 2.20 |
| Octadecane | C18H38 | 3.67 | 2.19 |
| Pentadecane | C15H32 | 3.64 | 2.17 |
| Nonadecane | C19H40 | 3.47 | 2.07 |
| Tetradecane | C14H30 | 3.37 | 2.01 |
| Eicosane | C20H42 | 3.29 | 1.96 |
| Tridecane | C13H28 | 3.21 | 1.92 |
| Dodecane | C12H26 | 2.98 | 1.78 |
| Heneicosane | C21H44 | 2.87 | 1.71 |
| Undecane | C11H24 | 2.82 | 1.68 |
| Decane | C10H22 | 2.44 | 1.46 |
| Nonane | C9H20 | 2.38 | 1.42 |
| Tetracosane | C24H50 | 2.36 | 1.41 |
| Octane | C8H18 | 2.30 | 1.37 |
| 1-Dodecanol | C12H26O | 2.12 | 3.03 |
| n-Pentadecanol | C15H32O | 2.09 | 2.99 |
| n-Pentadecanol | C15H32O | 2.08 | 2.97 |
| 1-Tetradecanol | C14H30O | 2.06 | 2.95 |
| 1-Undecanol | C11H240 | 2.03 | 2.91 |
| 1-Decene | C10H20 | 1.97 | 1.18 |
| Heptane | C7H16 | 1.97 | 1.17 |
| Tetracosane | C24H50 | 1.92 | 1.15 |
| Cyclooctane | C8H16 | 1.91 | 1.14 |
| 1-Hexadecanol | C16H34O | 1.80 | 2.57 |
| 1-Heptene | C7H14 | 1.79 | 1.07 |
| 1-Nonene | C9H18 | 1.59 | 0.95 |
| n-Heptadecanol-1 | C17H36O | 1.58 | 2.25 |
| 1-Hexene | C6H12 | 1.43 | 0.85 |
| Tetracosane | C24H50 | 1.39 | 0.83 |
| 1-Nonadecene | C19H38 | 1.34 | 0.80 |
| 2-Ethyl-oxetane | C5H10O | 1.22 | 1.75 |
| 1-Nonadecene | C19H38 | 1.04 | 0.62 |
| Tetracosane | C24H50 | 0.96 | 0.57 |
| Pentane | C5H12 | 0.85 | 0.51 |
| 1-Eicosene | C20H40 | 0.74 | 0.44 |
| Cyclopentene, 1-methyl- | C6H10 | 0.59 | 0.35 |
| Cyclohexene, 1-methyl- | C7H12 | 0.56 | 0.33 |
| Tetracosane | C24H50 | 1.56 | 0.33 |
| Total | | 82.81 | 61.32 |

Composition of Raw product of Example 1 (with activated graphene nanomaterial)

| | Formula | Area % | [wt%] |
|---|---|---|---|
| Heptadecane | C17H36 | 3.52 | 2.06 |
| Hexadecane | C16H34 | 3.48 | 2.03 |
| Pentadecane | C15H32 | 3.44 | 2.01 |
| Octadecane | C18H38 | 3.40 | 1.99 |
| Tetradecane | C14H30 | 3.18 | 1.86 |
| Nonadecane | C19H40 | 3.17 | 1.86 |
| Tridecane | C13H28 | 3.06 | 1.79 |
| Eicosane | C20H42 | 2.98 | 1.74 |
| Dodecane | C12H26 | 2.87 | 1.68 |
| Undecane | C11H24 | 2.71 | 1.59 |
| 1-Decene | C10H20 | 2.65 | 1.55 |
| n-Tridecan-1-ol | C13H28O | 2.52 | 3.53 |
| Heneicosane | C21H44 | 2.50 | 1.46 |
| 1-Tetradecanol | C14H30O | 2.48 | 3.47 |
| n-Pentadecanol | C15H32O | 2.46 | 3.45 |
| 1-Undecanol | C11H24O | 2.43 | 3.40 |
| 1-Dodecanol | C12H26O | 2.41 | 3.37 |
| Decane | C10H22 | 2.34 | 1.37 |
| Nonane | C9H20 | 2.21 | 1.29 |
| Cyclooctane | C8H16 | 2.13 | 1.25 |
| Tetracosane | C24H50 | 2.07 | 1.21 |
| 1-Nonene | C9H18 | 2.06 | 1.21 |
| Octane | C8H18 | 2.06 | 1.20 |
| 1-Hexadecanol | C16H34O | 1.97 | 2.76 |
| 1-Heptene | C7H14 | 1.96 | 1.15 |
| Heptane | C7H16 | 1.72 | 1.00 |
| n-Heptadecanol-1 | C17H36O | 1.70 | 2.39 |
| Tetracosane | C24H50 | 1.60 | 0.93 |
| 1-Hexene | C6H12 | 1.55 | 0.91 |
| 1-Octadecanol | C18H38O | 1.48 | 2.08 |
| 1-Nonadecene | C19H38 | 1.44 | 0.84 |
| Tetracosane | C24H50 | 1.15 | 0.67 |
| 1-Nonadecene | C19H38 | 1.10 | 0.65 |
| 2-Ethyl-oxetane | C5H10O | 1.01 | 1.42 |
| 1-Eicosene | C20H40 | 0.80 | 0.47 |
| Tetracosane | C24H50 | 0.78 | 0.46 |
| 2-Pentene, (Z)- | C5H10 | 0.78 | 0.45 |
| Cyclopentene, 1-methyl- | C6H10 | 0.59 | 0.34 |
| Cyclohexene, 1-methyl- | C7H12 | 0.53 | 0.31 |
| 1-Heneicosyl formate | C22H44O2 | 0.52 | 0.74 |
| **Total** | | **82.80** | **63.91** |

### Comparative Example 2: plastic PET powder

Step 1: 3000 g of mixed plastic proceeding from industrial waste in powder with a majority of PET were introduced in the flask, equipped with a fractionating column, and heating was initiated. The time to obtain the first drop of a liquid fraction comprising hydrocarbon compounds was 40 minutes. The average temperature in the flask was 86 °C.

Step 2: The plastic remaining in the flask after Step 1 was heated again. The time to obtain the first drop of a liquid fraction comprising hydrocarbon compounds was 23 minutes. The average temperature in the flask was 94 °C.

In total, i.e., both Steps 1 and 2 together, 1682 g of plastic were gasified during the method. 688.29 g of product were collected. Therefore, the yield of collected product over gasified plastic was 40.9 wt. %, and the yield of collected product over total plastic was 22.9 wt. %.

### Example 2 (according to the invention): PET powder and activated graphene nanomaterial

Step 1: 3000 g of mixed plastic proceeding from industrial waste in powder form with a majority of PET and 1 gr of activated graphene nanomaterial were introduced in the flask, equipped with a fractionating column, and heating was initiated. The time to obtain the first drop of a liquid fraction comprising hydrocarbon compounds was 45 minutes. The average temperature in the flask was 94 °C.

Step 2: The plastic remaining in the flask after Step 1 was heated again. The time to obtain the first drop of a liquid fraction comprising hydrocarbon compounds was 30 minutes. The average temperature in the flask was 97 °C.

In total, i.e., both Steps 1 and 2 together, 1857 g of PET powder were gasified during the method. 801.31 g of product were collected. Therefore, the yield of collected product over gasified plastic was 43.2 wt. %, and the yield of collected product over total plastic was 26.7 wt. %.

Therefore, the method according to the invention improved both the amount of gasified plastic, and the amount of collected product. Particularly, 175 g more plastic was gasified (an improvement of 10.4 %), and 113 g more product was collected (an improvement of 16.4 %).

### Comparative Example 3: Plastic film proceeding from industrial waste

Step 1: 3001 g of LDPE film proceeding from industrial waste were introduced in the flask, equipped with a fractionating column, and heating was initiated. The time to obtain the first drop of a liquid fraction comprising hydrocarbon compounds was 83 minutes. The average temperature in the flask was 138 °C.

Step 2: The plastic remaining in the flask after Step 1 was heated again. The time to obtain the first drop of a liquid fraction comprising hydrocarbon compound was 60 minutes. The average temperature in the flask was 173 °C.

In total, i.e., both Steps 1 and 2 together, 444 g of LDPE film were gasified during the method. 336 g of product were collected. Therefore, the yield of collected product over gasified film was 75.8 wt. %, and the yield of collected product over total plastic was 11.2 wt. %.

### Example 3 (according to the invention): Plastic film proceeding from industrial waste and activated graphene nanomaterial

Step 1: 3005 g of LDPE film proceeding from industrial waste and 1 gr of activated graphene nanomaterial were introduced in the flask, equipped with a fractionating column, and heating was initiated. The time to obtain the first drop of a liquid fraction comprising hydrocarbon compounds was 75 minutes. The average temperature in the flask was 155 °C.

Step 2: The plastic remaining in the flask after Step 1 was heated again. The time to obtain the first drop of a liquid fraction comprising hydrocarbon compounds was 73 minutes. The average temperature in the flask was 183 °C.

In total, i.e., both Steps 1 and 2 together, 725 g of LDPE film were gasified during the method. 627 g of product were collected. Therefore, the yield of collected product over gasified film was 86.5 wt. %, and the yield of collected product over total plastic was 20.9 wt. %.

Therefore, the method according to the invention improved both the amount of gasified plastic, and the amount of collected product. Particularly, 281 g more plastic was gasified (an improvement of 63.3 %), and 290.6 g more product was collected (an improvement of 86.4 %).

### Comparative Example 4: Mixed industrial plastic waste

Step 1: 3000 g of mixed industrial plastic waste were introduced in the flask, equipped with a fractionating column, and heating was initiated. The time to obtain the first drop of a liquid fraction comprising hydrocarbon compounds was 73 minutes. The average temperature in the flask was 107 °C.

Step 2: The plastic remaining in the flask after Step 1 was heated again. The time to obtain the first drop of a liquid fraction comprising hydrocarbon compounds was 98 minutes. The average temperature in the flask was 110 °C.

In total, i.e., both Steps 1 and 2 together, 1029 g of mixed industrial plastic waste were gasified during the method. 388.83 g of product were collected. Therefore, the yield of collected product over gasified plastic was 37.8 wt. %, and the yield of collected product over total plastic was 13.0 wt. %.

### Example 4 (according to the invention): Plastic film proceeding from industrial waste and activated graphene nanomaterial

Step 1: 3000 g of mixed industrial plastic waste and 1 gr of activated graphene nanomaterial were introduced in the flask, equipped with a fractionating column, and heating was initiated. The time to obtain the first drop of a liquid fraction comprising hydrocarbon compounds was 60 minutes. The average temperature in the flask was 119 °C.

Step 2: The plastic remaining in the flask after Step 1 was heated again. The time to obtain the first drop of a liquid fraction comprising hydrocarbon compounds was 52 minutes. The average temperature in the flask was 137 °C.

In total, i.e., both Steps 1 and 2 together, 1371 g of mixed industrial plastic waste were gasified during the method. 536.35 g of product were collected. Therefore, the yield of collected product over gasified film was 39.1 wt. %, and the yield of collected product over total plastic was 17.9 wt. %.

Therefore, the method according to the invention improved both the amount of gasified plastic, and the amount of collected product. Particularly, 342 g more plastic were gasified (an improvement of 33.2 %), and 147.5 g more product were collected (an improvement of 37.9 %). Additionally, the time to obtain the first drop was reduced in the method according to the invention.

### Comparative Example 5a: Printed plastic film proceeding from industrial waste

Step 1: 2700 g of printed plastic film proceeding from industrial waste were introduced in the flask, equipped with a fractionating column, and heating was initiated. The time to obtain the first drop of a liquid fraction comprising hydrocarbon compounds was 79 minutes. The average temperature in the flask was 155 °C.

Step 2: The plastic remaining in the flask after Step 1 was heated again. The time to obtain the first drop of a liquid fraction comprising hydrocarbon compounds was 30 minutes. The average temperature in the flask was 167 °C.

In total, i.e., both Steps 1 and 2 together, 971 g of printed plastic film were gasified during the method. 562 g of product were collected. Therefore, the yield of collected product over gasified film was 57.9% wt. %, and the yield of collected product over total plastic was 20.8 wt. %.

### Comparative Example 5b: Printed plastic film proceeding from industrial waste and Carbon Black

Step 1: 2700 g of printed plastic film proceeding from industrial waste and 1 gr of Carbon Black (obtained from Penta Carbon brand) were introduced in the flask, equipped with a fractionating column, and heating was initiated. The time to obtain the first drop of a liquid fraction comprising hydrocarbon compounds was 148 minutes. The average temperature in the flask was 91°C.

Step 2: The plastic remaining in the flask after Step 1 was heated again. The time to obtain the first drop of a liquid fraction comprising hydrocarbon compounds was 38 minutes. The average temperature in the flask was 142 °C.

In total, i.e., both Steps 1 and 2 together, 585 g of printed plastic film were gasified during the method. 351 g of product were collected. Therefore, the yield of collected product over gasified film was 60.0 wt. %, and the yield of collected product over total plastic was 13.0 wt. %.

### Comparative Example 5c: Printed plastic film proceeding from industrial waste and Carbon Nanotubes

Step 1: 2700 g of printed plastic film proceeding from industrial waste and 1 gr of Carbon Nanotubes (Multi-walled Carbon Nanotube Powder obtained from the Graphene Supermarket) were introduced in the flask, equipped with a fractionating column, and heating was initiated. The time to obtain the first drop a liquid fraction comprising hydrocarbon compounds was 125 minutes. The average temperature in the flask was 82 °C.

Step 2: The plastic remaining in the flask after Step 1 was heated again. The time to obtain the first drop of a liquid fraction comprising hydrocarbon compounds was 30 minutes. The average temperature in the flask was 165 °C.

In total, i.e., both Steps 1 and 2 together, 817 g of printed plastic film were gasified during the method. 383 g of product were collected. Therefore, the yield of collected product over gasified film was 46.8 wt. %, and the yield of collected product over total plastic was 14.2 wt. %.

### Comparative Example 5d: Printed plastic film proceeding from industrial waste and Graphene Flakes

Step 1: 2700 g of printed plastic film proceeding from industrial waste and 1 gr of Graphene Flakes ("AvPat 2" obtained from Avanzare) were introduced in the flask, equipped with a fractionating column, and heating was initiated. The time to obtain the first drop of a liquid fraction comprising hydrocarbon compounds was 95 minutes. The average temperature in the flask was 105 °C.

Step 2: The plastic remaining in the flask after Step 1 was heated again. The time to obtain the first drop of a liquid fraction comprising hydrocarbon compounds was 30 minutes. The average temperature in the flask was 135 °C.

In total, i.e., both Steps 1 and 2 together, 589 g of printed plastic film were gasified during the method. 294 g of product were collected. Therefore, the yield of collected product over gasified film was 50.0 wt. %, and the yield of collected product over total plastic was 10.9 wt. %.

### Example 5 (according to the invention): Printed plastic film proceeding from industrial waste and activated graphene nanomaterial

Step 1: 2700 g of plastic film proceeding from industrial waste and 1 gr of activated graphene nanomaterial were introduced in the flask, equipped with a fractionating column, and heating was initiated. The time to obtain the first drop of a liquid fraction comprising hydrocarbon compounds was 80 minutes. The average temperature in the flask was 164 °C.

Step 2: The plastic remaining in the flask after Step 1 was heated again. The time to obtain the first drop of a liquid fraction comprising hydrocarbon compounds was 38 minutes. The average temperature in the flask was 156 °C.

In total, i.e., both Steps 1 and 2 together, 1084 g of plastic film proceeding from industrial waste were gasified during the method. 657 g of liquid product were collected. Therefore, the yield of collected product over gasified film was 60.6 wt. %, and the yield of collected product over total plastic was 24.3 wt. %.

Therefore, the method according to the invention improved both the amount of gasified plastic, and the amount of collected product, in comparison to the same method without adding any carbon source, as well as to the same method adding diverse carbon sources, particularly carbon black, carbon nanotubes and graphene flakes. The obtained data are collected in following table:

| | **Carbon source** | **Plastic sample (9)** | **Gasified plastic (g)** | **Collected liquid product (9)** | **Yield of gasification (%)** | **Yield over gasified plastic (%)** | **Yield over total plastic (%)** |
|---|---|---|---|---|---|---|---|
| Example 5a (comparative) | / | 2700 | 971 | 562 | 36.0 | 57.9 | 20.8 |
| Example 5b (comparative) | Carbon Black | 2700 | 585 | 351 | 21.7 | 60.0 | 13.0 |
| Example 5c (comparative) | Carbon Nanotubes | 2700 | 817 | 383 | 30.3 | 46.8 | 14.2 |
| Example 5d (comparative) | Graphene Flakes | 2700 | 589 | 294 | 21.8 | 50 | 10.9 |
| Example 5 (invention) | Activated Graphene nanomaterial | 2700 | 1084 | 657 | 40.1 | 60.6 | 24.3 |

As may be observed from the above table, when no carbon source is used, 113 gr less plastic is gasified than with the activated graphene nanomaterial used according to the present invention, that is, 10.4 % less plastic is gasified; further, 95 gr less product is collected, 14.4 % less.

Further, when carbon black is used as carbon source, 449 gr less plastic is gasified than with the activated graphene nanomaterial used according to the present invention, that is, 46.0 % less plastic is gasified; further, 306 gr less product is collected, 46.6 % less.

When carbon nanotubes is used as carbon source, 267 gr less plastic is gasified than with the activated graphene nanomaterial used according to the present invention, that is, 24.6 % less plastic is gasified; further, 275 gr less product is collected, 41.8 % less.

When graphene flakes are used as carbon source, 495 gr less plastic is gasified than with the activated graphene nanomaterial used according to the present invention, that is, 45.7 % less plastic is gasified; further, 363 gr less product is collected, 55.2 % less.

That is, the experimental results obtain clearly show an unexpected, surprising result obtained by the use of the activated graphene nanomaterial used according to the present invention.

### Example 6: RAMAN spectroscopy for activated graphene nanomaterial as used in the method of the invention

Several samples of activated graphene nanomaterial were prepared by deposition of about 0.5 grams of nanomaterial on a glass sample holder, covering an approximate area of 5x5 mm². Then the samples were subjected to RAMAN Spectroscopy. The results are shown in the following table:

| **Sample N°** | **I_{D}** | **I_{G}** | **I_{D} / I_{G}** |
|---|---|---|---|
| 1 | 20558.86 | 21422.61 | 0.96 |
| 2 | 16240.10 | 16940.44 | 0.96 |
| 3 | 12193.69 | 12629.46 | 0.97 |
| 4 | 18994.77 | 19640.63 | 0.97 |
| 5 | 14730.48 | 15057.30 | 0.98 |
| 6 | 15376.34 | 15703.17 | 0.98 |
| 7 | 14139.08 | 14567.06 | 0.97 |
| 8 | 24659.73 | 25686.90 | 0.96 |
| 9 | 23469.16 | 24223.97 | 0.97 |
| 10 | 19267.12 | 19858.52 | 0.97 |
| average | 18105.33 | 18685.91 | 0.97 |

Fig. 1 shows a graph representing the average result of RAMAN spectroscopy.

## Claims

1. Method for transforming solid plastic waste into linear, ramified and/or cyclic, saturated and/or unsaturated, hydrocarbons, having from 1 to 24 carbon atoms, **characterized in that** the method comprises the steps of:
a) introducing solid plastic waste in a receptacle provided with an outlet, a heat source and a condenser, wherein the solid plastic waste may be a specific type of solid plastic waste or be a mixture of different plastic materials;
b) adding an activated graphene nanomaterial to the receptacle in an amount of from 0.001 to 1 wt.% with regard to the amount of solid plastic waste, wherein the activated graphene nanomaterial:
i) comprises at least 90% of carbon, as measured according to energy dispersive X-ray analysis;
ii) is insoluble in water;
iii) presents both a D band, corresponding to sp³ orbital hybridization, and a G band, corresponding to sp2 orbital hybridization, when submitted to RAMAN spectroscopy, wherein ratio of the intensity of the D band over the G band (I_{D}/I_{G} ) is below 1.
c) heating the receptacle to a temperature from 50 to 400 °C, thereby generating gases,
d) collecting the generated gases through the outlet;
e) refrigerating the gases through a gas refrigerating unit, until condensation of at least a fraction thereof, to obtain a liquid fraction comprising linear, ramified and/or cyclic saturated and/or unsaturated hydrocarbons in liquid form and, optionally, a gaseous fraction comprising linear, ramified and/or cyclic saturated and/or unsaturated hydrocarbons in gas form.

2. Method according to claim 1, wherein in step c) the heating is to a temperature from 70 to 400 °C, preferably to a temperature from 60 to 350 °C, in particular from 70 to 300 °C, more in particular from 80 to 275 °C.

3. Method according to any one of claims 1 and 2, wherein, if the solid plastic waste is a specific type of solid plastic waste, the heating temperature of the receptacle in step c) is:
- below the melt temperature Tₘ of such specific type of solid plastic waste; or
- below the glass transition temperature Tg of such specific type of solid plastic waste.

4. Method according to any one of claims 1 and 2, wherein, if the solid plastic waste is a mixture of different plastic materials, the heating temperature of the receptacle in step c) is:
- below the melt temperature Tₘ of the plastic material in the mixture which has the lowest melt temperature; or
- below the glass transition temperature T_{g} of the plastic material in the mixture which has the lowest glass transition temperature.

5. Method according to any one of claims 1 to 4, wherein in step c) the heating is performed in one step.

6. Method according to any one of claims 1 to 4, wherein in step c) the heating is performed in several steps, preferably 2, 3, 4 or 5 steps, the temperatures of the individual steps being the same or different.

7. Method according to one of claims 1 to 6, wherein hydrocarbons obtained in liquid form have from 4 to 24 carbon atoms, in particular from 5 to 22 carbon atoms and more in particular from 6 to 20 carbon atoms, and hydrocarbons obtained in gas form, if obtained, have from 1 to 6 carbon atoms, in particular from 1 to 4 carbon atoms.

8. Method according to any one of claims 1 to 7, wherein the receptacle is a round-bottom flask or a reactor provided with means for temperature and pressure control.

9. Method according to any one of claims 1 to 8, wherein the solid plastic waste is selected from polyethylene (PE), low density polyethylene (LDPE), high density polyethylene (HDPE), polypropylene (PP), polypropylene ethylene terephthalate (PET), poly-vinyl chloride (PVC), polystyrene (PS), polyamide, nylon, acrylonitrile-butadienestyrene (ABS), ethylvinyl alcohol (EVOH), melamine formaldehyde (MF), Polybutadiene (PBD), Polybutylene (PB), Polycarbonate (PC), HIPS (high impact polystyrene), Polyacetal (acetal), Polyurethane (PU), (polytetrafluoroethylene) PTFE, or mixtures of two or more thereof, preferably from polyethylene, low density polyethylene, high density polyethylene, polyethylene terephthalate, polyvinyl chloride, polypropylene, polystyrene or mixtures of two or more thereof.

10. Method according to any one of claims 1 to 9, wherein the solid plastic waste is in powder form, is in the form of pieces with a length of between 5 and 100 mm, or is a mixture thereof.

11. Method according to any one of claims 1 to 10, wherein in step c) an inert atmosphere is provided.

12. Method according to claim 11, wherein the inert atmosphere is provided by purging the receptacle with argon or nitrogen, preferably argon.

13. Method according to any one of claims 1 to 12, wherein the heat source is selected from an external heat source and an integrated heat source.

14. Method according to any one of claims 1 to 13, wherein the condenser is selected from an Allihn condenser, a Liebig-West condenser or a spiral condenser.

15. Method according to any one of claims 1 to 14, wherein the gaseous fraction, if obtained, comprising linear, ramified and/or cyclic, saturated and/or unsaturated, hydrocarbons, is used as a fuel for the heat source in the heating step c), and/or is recycled into the receptacle.

## Patentansprüche

1. Verfahren zum Umwandeln von festem Kunststoffabfall in lineare, verzweigte und/oder cyclische, gesättigte und/oder ungesättigte Kohlenwasserstoffe mit 1 bis 24 Kohlenstoffatomen, **dadurch gekennzeichnet, dass** das Verfahren die Schritte umfasst:
a) Einbringen von festem Kunststoffabfall in einen Behälter, der mit einem Auslass, einer Wärmequelle und einem Kondensator versehen ist, wobei der feste Kunststoffabfall ein spezifischer Typ von festem Kunststoffabfall oder eine Mischung verschiedener Kunststoffmaterialien sein kann;
b) Zugeben eines aktivierten Graphen-Nanomaterials zu dem Behälter in einer Menge von 0,001 bis 1 Gew.-%, bezogen auf die Menge an festem Kunststoffabfall, wobei das aktivierte Graphen-Nanomaterial:
i) mindestens 90 % Kohlenstoff umfasst, gemessen gemäß energiedispersiver Röntgenanalyse;
ii) in Wasser unlöslich ist;
iii) sowohl eine D-Bande, die einer sp³-Orbitalhybridisierung entspricht, als auch eine G-Bande, die einer sp2-Orbitalhybridisierung entspricht, zeigt, wenn sie RAMAN-Spektroskopie unterzogen wird, wobei das Verhältnis der Intensität der D-Bande zu der G-Bande (I_{D}/I_{G} ) unter 1 liegt.
c) Erwärmen des Behälters auf eine Temperatur von 50 bis 400 °C, wodurch Gase erzeugt werden,
d) Sammeln der erzeugten Gase durch den Auslass;
e) Kühlen der Gase durch eine Gaskühleinheit bis zur Kondensation mindestens einer Fraktion davon, um eine flüssige Fraktion, die lineare, verzweigte und/oder cyclische gesättigte und/oder ungesättigte Kohlenwasserstoffe in flüssiger Form umfasst, und gegebenenfalls eine gasförmige Fraktion, die lineare, verzweigte und/oder cyclische gesättigte und/oder ungesättigte Kohlenwasserstoffe in gasförmiger Form umfasst, zu erhalten.

2. Verfahren gemäß Anspruch 1, wobei in Schritt c) das Erwärmen auf eine Temperatur von 70 bis 400 °C, vorzugsweise auf eine Temperatur von 60 bis 350 °C, insbesondere von 70 bis 300 °C, weiter insbesondere von 80 bis 275 °C erfolgt.

3. Verfahren gemäß einem der Ansprüche 1 und 2, wobei, sofern der feste Kunststoffabfall ein spezifischer Typ von festem Kunststoffabfall ist, die Erwärmungstemperatur des Behälters in Schritt c):
- unter der Schmelztemperatur Tₘ eines solchen spezifischen Typs von festem Kunststoffabfall liegt; oder
- unter der Glasübergangstemperatur Tg eines solchen spezifischen Typs von festem Kunststoffabfall liegt.

4. Verfahren gemäß einem der Ansprüche 1 und 2, wobei, sofern der feste Kunststoffabfall eine Mischung verschiedener Kunststoffmaterialien ist, die Erwärmungstemperatur des Behälters in Schritt c):
- unter der Schmelztemperatur Tₘ des Kunststoffmaterials in der Mischung liegt, das die niedrigste Schmelztemperatur aufweist; oder
- unter der Glasübergangstemperatur T_{g} des Kunststoffmaterials in der Mischung liegt, das die niedrigste Glasübergangstemperatur aufweist.

5. Verfahren gemäß einem der Ansprüche 1 bis 4, wobei in Schritt c) das Erwärmen in einem Schritt durchgeführt wird.

6. Verfahren gemäß einem der Ansprüche 1 bis 4, wobei in Schritt c) das Erwärmen in mehreren Schritten, vorzugsweise 2, 3, 4 oder 5 Schritten durchgeführt wird, wobei die Temperaturen der einzelnen Schritte gleich oder verschieden sind.

7. Verfahren gemäß einem der Ansprüche 1 bis 6, wobei in flüssiger Form erhaltene Kohlenwasserstoffe 4 bis 24 Kohlenstoffatome, insbesondere 5 bis 22 Kohlenstoffatome und weiter insbesondere 6 bis 20 Kohlenstoffatome aufweisen und in gasförmiger Form erhaltene Kohlenwasserstoffe, falls erhalten, 1 bis 6 Kohlenstoffatome, insbesondere 1 bis 4 Kohlenstoffatome aufweisen.

8. Verfahren gemäß einem der Ansprüche 1 bis 7, wobei der Behälter ein Rundbodenkolben oder ein Reaktor ist, der mit Mitteln zur Temperatur- und Drucksteuerung versehen ist.

9. Verfahren gemäß einem der Ansprüche 1 bis 8, wobei der feste Kunststoffabfall ausgewählt ist aus Polyethylen (PE), Polyethylen niedriger Dichte (LDPE), Polyethylen hoher Dichte (HDPE), Polypropylen (PP), Polypropylenethylenterephthalat (PET), Polyvinylchlorid (PVC), Polystyrol (PS), Polyamid, Nylon, Acrylnitril-Butadien-Styrol (ABS), Ethylvinylalkohol (EVOH), Melaminformaldehyd (MF), Polybutadien (PBD), Polybutylen (PB), Polycarbonat (PC), HIPS (hochschlagfestes Polystyrol), Polyacetal (Acetal), Polyurethan (PU), (Polytetrafluorethylen) PTFE oder Mischungen von zwei oder mehr davon, vorzugsweise aus Polyethylen, Polyethylen niedriger Dichte, Polyethylen hoher Dichte, Polyethylenterephthalat, Polyvinylchlorid, Polypropylen, Polystyrol oder Mischungen von zwei oder mehr davon.

10. Verfahren gemäß einem der Ansprüche 1 bis 9, wobei der feste Kunststoffabfall in Pulverform vorliegt, in Form von Stücken mit einer Länge zwischen 5 und 100 mm vorliegt oder eine Mischung davon ist.

11. Verfahren gemäß einem der Ansprüche 1 bis 10, wobei in Schritt c) eine inerte Atmosphäre bereitgestellt wird.

12. Verfahren gemäß Anspruch 11, wobei die inerte Atmosphäre durch Spülen des Behälters mit Argon oder Stickstoff, vorzugsweise Argon, bereitgestellt wird.

13. Verfahren gemäß einem der Ansprüche 1 bis 12, wobei die Wärmequelle aus einer externen Wärmequelle und einer integrierten Wärmequelle ausgewählt ist.

14. Verfahren gemäß einem der Ansprüche 1 bis 13, wobei der Kondensator aus einem Allihn-Kondensator, einem Liebig-West-Kondensator oder einem Spiralkondensator ausgewählt ist.

15. Verfahren gemäß einem der Ansprüche 1 bis 14, wobei die gasförmige Fraktion, falls erhalten, die lineare, verzweigte und/oder cyclische, gesättigte und/oder ungesättigte Kohlenwasserstoffe umfasst, als Brennstoff für die Wärmequelle in dem Erwärmungsschritt c) verwendet wird und/oder in den Behälter zurückgeführt wird.

## Revendications

1. Procédé de transformation de déchets plastiques solides en hydrocarbures linéaires, ramifiés et/ou cycliques, saturés et/ou insaturés, ayant 1 à 24 atomes de carbone, **caractérisé en ce que** le procédé comprend les étapes de :
a) introduction des déchets plastiques solides dans un réceptacle pourvu d'une sortie, d'une source de chaleur et d'un condenseur, dans lequel les déchets plastiques solides peuvent être un type spécifique de déchets plastiques solides ou un mélange de différents matériaux plastiques ;
b) ajout au réceptacle d'un nanomatériau de graphène activé en une quantité allant de 0,001 à 1% en poids par rapport à la quantité de déchets plastiques solides, dans lequel le nanomatériau de graphène activé :
i) comprend au moins 90% de carbone, tel que mesuré par analyse aux rayons X à dispersion d'énergie ;
ii) est insoluble dans l'eau ;
iii) présente à la fois une bande D, correspondant à une hybridation orbitale sp³, et une bande G, correspondant à une hybridation orbitale sp², lorsqu'il est soumis à la spectroscopie RAMAN, dans lequel le rapport de l'intensité de la bande D sur la bande G (I_{D}/I_{G}) est inférieur à 1.
c) chauffage du réceptacle à une température allant de 50 à 400°C, générant ainsi des gaz,
d) collecte des gaz générés par la sortie ;
e) refroidissement des gaz par une unité de refroidissement de gaz, jusqu'à la condensation d'au moins une fraction de ceux-ci, afin d'obtenir une fraction liquide comprenant des hydrocarbures linéaires, ramifiés et/ou cycliques saturés et/ou insaturés sous forme liquide et, éventuellement, une fraction gazeuse comprenant des hydrocarbures linéaires, ramifiés et/ou cycliques saturés et/ou insaturés sous forme gazeuse.

2. Procédé selon la revendication 1, dans lequel, à l'étape c), le chauffage est effectué à une température allant de 70 à 400°C, de préférence à une température allant de 60 à 350°C, en particulier allant de 70 à 300°C, plus particulièrement allant de 80 à 275°C.

3. Procédé selon l'une quelconque des revendications 1 et 2, dans lequel, si les déchets plastiques solides sont un type spécifique de déchets plastiques solides, la température de chauffage du réceptacle à l'étape c) est :
- inférieure à la température de fusion Tₘ de ce type spécifique de déchets plastiques solides ; ou
- inférieure à la température de transition vitreuse T_{g} de ce type spécifique de déchets plastiques solides.

4. Procédé selon l'une quelconque des revendications 1 et 2, dans lequel, si les déchets plastiques solides sont un mélange de différents matériaux plastiques, la température de chauffage du réceptacle à l'étape c) est :
- inférieure à la température de fusion Tₘ du matériau plastique dans le mélange qui présente la température de fusion la plus basse ; ou
- inférieure à la température de transition vitreuse T_{g} du matériau plastique dans le mélange qui présente la température de transition vitreuse la plus basse.

5. Procédé selon l'une quelconque des revendications 1 à 4, dans lequel, à l'étape c), le chauffage est réalisé en une seule étape.

6. Procédé selon l'une quelconque des revendications 1 à 4, dans lequel, à l'étape c), le chauffage est réalisé en plusieurs étapes, de préférence 2, 3, 4 ou 5 étapes, les températures des différentes étapes étant identiques ou différentes.

7. Procédé selon l'une des revendications 1 à 6, dans lequel les hydrocarbures obtenus sous forme liquide ont 4 à 24 atomes de carbone, en particulier 5 à 22 atomes de carbone et plus particulièrement 6 à 20 atomes de carbone, et les hydrocarbures obtenus sous forme gazeuse, s'ils sont obtenus, ont 1 à 6 atomes de carbone, en particulier 1 à 4 atomes de carbone.

8. Procédé selon l'une quelconque des revendications 1 à 7, dans lequel le réceptacle est un ballon à fond rond ou un réacteur pourvu de moyens de régulation de température et de pression.

9. Procédé selon l'une quelconque des revendications 1 à 8, dans lequel les déchets plastiques solides sont choisis parmi le polyéthylène (PE), le polyéthylène basse densité (LDPE), le polyéthylène haute densité (HDPE), le polypropylène (PP), le polyéthylène téréphtalate (PET), le polychlorure de vinyle (PVC), le polystyrène (PS), le polyamide, le nylon, l'acrylonitrile-butadiène-styrène (ABS), l'éthylène-alcool vinylique (EVOH), le mélamine-formaldéhyde (MF), le Polybutadiène (PBD), le Polybutylène (PB), le Polycarbonate (PC), le HIPS (polystyrène à haute résistance aux chocs), le Polyacétal (acétal), le Polyuréthane (PU), le polytétrafluoroéthylène PTFE, ou des mélanges de deux ou plus de ceux-ci, de préférence parmi le polyéthylène, le polyéthylène basse densité, le polyéthylène haute densité, le polyéthylène téréphtalate, le polychlorure de vinyle, le polypropylène, le polystyrène ou des mélanges de deux ou plus de ceux-ci.

10. Procédé selon l'une quelconque des revendications 1 à 9, dans lequel les déchets plastiques solides se présentent sous forme de poudre, sous forme de morceaux d'une longueur comprise entre 5 et 100 mm, ou sont un mélange de ces formes.

11. Procédé selon l'une quelconque des revendications 1 à 10, dans lequel, à l'étape c), une atmosphère inerte est fournie.

12. Procédé selon la revendication 11, dans lequel l'atmosphère inerte est fournie en purgeant le réceptacle avec de l'argon ou de l'azote, de préférence de l'argon.

13. Procédé selon l'une quelconque des revendications 1 à 12, dans lequel la source de chaleur est choisie parmi une source de chaleur externe et une source de chaleur intégrée.

14. Procédé selon l'une quelconque des revendications 1 à 13, dans lequel le condenseur est choisi parmi un condenseur d'Allihn, un condenseur Liebig-West ou un condenseur à spirale.

15. Procédé selon l'une quelconque des revendications 1 à 14, dans lequel la fraction gazeuse, si elle est obtenue, comprenant des hydrocarbures linéaires, ramifiés et/ou cycliques, saturés et/ou insaturés, est utilisée comme combustible pour la source de chaleur dans l'étape de chauffage c), et/ou est recyclée dans le réceptacle.
